# EUROPÄISCHE PATENTSCHRIFT

(11) **EP 2 270 404 B1**
(45) Veröffentlichungstag und Bekanntmachung des Hinweises auf die Patenterteilung: **12.08.2015**
(21) Anmeldenummer: 10006477.3
(22) Anmeldetag: 22.06.2010
(51) Int. Cl.: F24J 2/52

(54) **Schwimmfähige Plattform zur Anordnung von Solarmodulen auf einem Gewässer**
Buoyant platform for assembling solar modules on a body of water
Plateforme flottante destinée à l'agencement de modules solaires sur l'eau

(30) Priorität: 01.07.2009 DE 102009031256
(43) Veröffentlichungstag der Anmeldung: 05.01.2011
(73) Patentinhaber: Pfirrmann, Thomas, 76646 Bruchsal (DE); Türk, Holger, 92224 Amberg (DE)
(72) Erfinder: Pfirrmann, Thomas, 76646 Bruchsal (DE); Türk, Holger, 92224 Amberg (DE)
(74) Vertreter: Graf Glück Kritzenberger

(56) Entgegenhaltungen:
- DE-A1- 2 812 771
- DE-U1- 29 819 997
- US-A- 5 845 594
- US-A1- 2004 028 478
- US-A1- 2006 090 789
- US-A1- 2006 153 643
- US-A1- 2007 234 945
- US-A1- 2009 078 189

## Beschreibung

Die Erfindung betrifft eine schwimmfähige Plattform zur Anordnung von Solarmodulen auf einem Gewässer, gemäß dem Oberbegriff des Patentanspruches 1.

Solarpaneele bzw. Solarmodule, insbesondere in Form von Photovoltaik- oder auch solarthermischen Modulen sind hinreichend aus dem Stand der Technik bekannt. Derartige Solarmodule werden häufig auf Gebäudedächern oder an Fassaden sowie auf speziell hierzu vorgesehenen gestellartigen Hältevorrichtüngen angeordnet.

Die Förderung erneuerbarer Energien, insbesondere auf dem Gebiet der Photovoltaikanlagen hat zu einer erhöhten Nachfrage nach geeigneten Nutzflächen geführt. Der Aufbau derartiger Anlagen auf Dächern oder auf Freigelände wird in zunehmendem Maße schwieriger, da immer weniger geeignete Freiflächen zur Verfügung stehen.

Aus der Druckschrift DE 24 41 770 ist beispielsweise eine Vorrichtung zur Aufnahme von Sonnenstrahlfanggeräten bekannt, die eine Anordnung von Solarelementen auf einem natürlichen oder künstlichen Gewässer ermöglicht. Die Solarelemente sind hierbei auf Schwimmkörpern angeordnet und können somit auf einem Gewässer schwimmend aufgenommen werden.

Der Druckschrift DE 20 2008 006 347 U1 ist ein Tragsystem für eine Photovoltaikanlage zu entnehmen, das einen schwimmfähigen Unterbau aufweist, der aus mindestens einem pontonähnlich ausgebildeten Schwimmkörper besteht. Auf dem Schwimmkörper ist zumindest ein Trägerrahmen zur Befestigung der Solarmodule in einem Winkel α festgelegt, der an territorialen Einfallswinkel der Sonnenstrahlung angepasst ist.

Ein Wasserfahrzeug bestehend aus einer Vielzahl von miteinander verbundenen rechteckförmigen Gitterrohrrahmen zur Aufnahme von Schwimmkörpern ist aus der Druckschrift US 2009/0078189 A1 bekannt.

Nachteilig am dargelegten Stand der Technik ist, dass die Plattformen zur Anordnung von Solarmodulen nur sehr schwierig aufzubauen sind, eine geringe Stabilität aufweisen und zudem nicht beliebig erweiterbar sind.

Ausgehend vom dargelegten Stand der Technik liegt der vorliegenden Erfindung die Aufgabe zu Grunde, die aufgezeigten Nachteile des Standes der Technik zu überwinden. Die Aufgabe wird erfindungsgemäß ausgehend von den Merkmalen des Oberbegriffes des Patentanspruches 1 durch dessen kennzeichnende Merkmale gelöst.

Der wesentliche Aspekt des erfindungsgemäßen Gegenstands ist darin zu sehen, dass die Plattform aus mehreren schwimmfähigen, von Schwimmkörpern getragenen Plattformsegmenten besteht, die jeweils dieselbe Querschnittsform aufweisen und dass jeweils ein schwimmfähiges Plattformsegment einen freitragenden Gitterrohrrahmen aufweist, wobei durch die Verbindung der freitragenden Gitterrohrrahmen der einzelnen Plattformsegmente die Rahmenkonstruktion der Plattform gebildet ist. Dadurch wird eine leicht in Einzelsegmenten transportable Plattform geschaffen, die durch die schwimmende Ausbildung der einzelnen Plattformsegmente auf einem Binnengewässer installierbar ist.

Der Gitterrohrrahmen weist eine dreieckige oder trapezförmige Querschnittsform auf, wobei beispielsweise aus zwölf derartigen Gitterrohrrahmen eine Rahmenkonstruktion mit der Form eines regelmäßigen Sechsecks gebildet wird. Durch die Sechseckform wird eine Plattform geschaffen, die in sechs Raumrichtungen wabenartig durch das Anordnen weiterer Plattformen erweiterbar ist.

Vorzugsweise sind die Schwimmkörper in gleich beabstandeten Reihen am Gitterrohrrahmen angeordnet. Der Gitterrohrrahmen, der aus mehreren Längs- und Querträger gebildet ist, überspannt hierbei mittels der Querträger zumindest teilweise die aus Schwimmkörpern gebildeten Reihen. Dadurch wird eine im Wesentlichen zum Gewässer hin offene Rahmenkonstruktion erreicht, die eine ausreichende Hinterlüftung der Solarmodule und zudem eine Kühlung derselben durch die aufsteigende Verdunstungskälte ermöglicht.

Zum Verbinden der Gitterrohrrahmen untereinander zu einer Plattform sind an den Außenseiten der Gitterrohrrahmen Flansche vorgesehen. Mittels dieser Flansche lassen sich die einzelnen Gitterrohrrahmen beispielsweise über Schraubverbindungen zu einer Rahmenkonstruktion einer Plattform zusammenfügen und bilden damit eine Grundeinheit, die durch Anordnen weiterer Plattformen je nach Bedarf erweiterbar ist. Zur Kopplung der Plattformen untereinander sind an den Umfangsseiten der Rahmenkonstruktion Flansche vorgesehen. Diese dienen auch zur Befestigung von Ankerflanschen, an denen Ankertrosse zur Sicherung der Plattformen gegen Abdriften befestigt werden können.

Gemäß einer besonders bevorzugten Ausbildung ist zumindest ein Wechselrichter auf der Plattform angeordnet, und zwar vorzugsweise in einem wasserdichten Bereich, insbesondere in einem wasserdicht ausgebildeten Schaltschrank. Zur Abführung der im Wechselrichter entstehenden Wärme in das Binnengewässer ist ein Kühlkreislauf vorgesehen. Dadurch kann der Wirkungsgrad der Gesamtanlage zum einen durch den reduzierten elektrischen Übertragungsweg von den Solarmodulen hin zum Wechselrichter, zum anderen durch die geringeren Verluste aufgrund der effektiven Kühlung des Wechselrichters gesteigert werden.

Zur Erhöhung des Wirkungsgrades der Solarmodule sind vorzugsweise Mittel zur sonnenstandsabhängigen Ausrichtung derselben vorgesehen. Es wird hierbei als bevorzugt angesehen, die Solarmodule selbst in ihrem Vertikalwinkel bezogen auf die Plattform schwenkbar vorzusehen und die Nachführung der Solarmodule im Horizontalwinkel durch Drehung der Plattform auf dem Binnengewässer zu bewerkstelligen.

Weitere vorteilhafte Weiterbildungen der Erfindung sind Gegenstand der abhängigen Ansprüche. Zudem ergeben sich Weiterbildungen, Vorteile und Anwendungsmöglichkeiten der Erfindung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Nachfolgend wird die Erfindung an einem Ausführungsbeispiel anhand von mehrerer Figuren näher beschrieben. Es zeigen:
- Fig. 1: beispielhaft eine schematischen Draufsicht auf eine schwimmfähige Plattform mit Solarmodulen und Wechselrichter;
- Fig. 2: beispielhaft eine schematische Seitenansicht einer schwimmfähigen Plattform mit Solarmodulen und Wechselrichtern;
- Fig. 3: beispielhaft eine Draufsicht auf die Rahmenkonstruktion der schwimmenden Plattform gemäß den Figuren 1 und 2;
- Fig. 4a: beispielhaft ein schwimmfähiges Plattformsegment in einer Draufsicht;
- Fig. 4b: beispielhaft eine Schnittdarstellung entlang der Schnittlinie A-A des schwimmfähigen Plattformsegmentes gemäß Figur 4a;
- Fig. 5: beispielhaft eine schwimmfähige Plattform ohne Solarmodule in einer Draufsicht;
- Fig. 6: beispielhaft eine seitliche Schnittdarstellung eines auf der schwimmfähigen Plattform angeordneten Wechselrichters mit Kühlung;
- Fig. 7: beispielhaft eine schematische Darstellung einer Anordnung mehrerer schwimmfähiger Plattformen auf einem Binnengewässer;
- Fig. 8: beispielhaft eine schematische Darstellung einer Anordnung mehrerer schwimmender Plattformen auf einem Binnengewässer mit einer Ankoppelinsel;
- Fig. 9: beispielhaft eine schematische Darstellung einer Anordnung mehrerer schwimmender Plattformen auf einem Binnengewässer mit mehreren landgestützten Wechselrichtern und
- Fig. 10: beispielhaft eine schematische Darstellung der Verankerung mehrerer schwimmender Plattformen auf einem Binnengewässer.

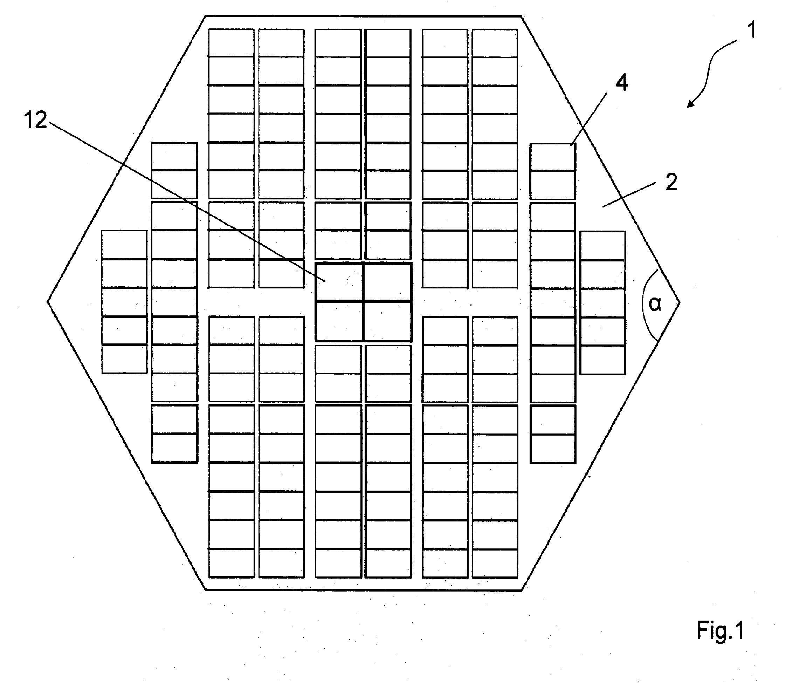

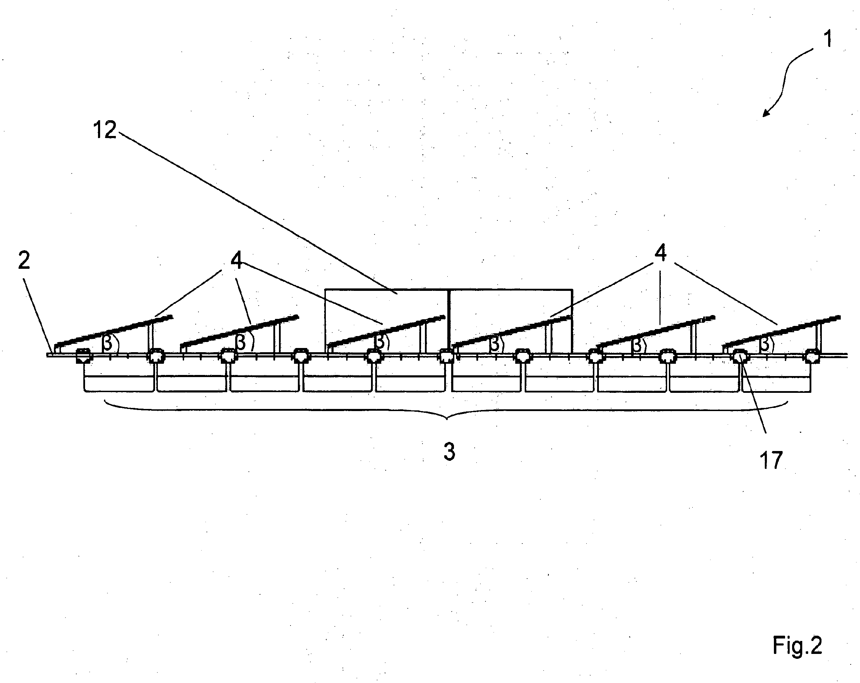

Die Figuren 1 und 2 zeigen eine erfindungsgemäße schwimmfähige Plattform 1 in einer schematischen Draufsicht und Seitenansicht. Die schwimmfähige Plattform 1 ist zur Aufnahme einer Vielzahl von Solarmodulen 4, insbesondere Photovoltaikmodule oder solarthermische Module ausgebildet und besteht im Wesentlichen aus einer Rahmenkonstruktion 2 und einer Vielzahl von Schwimmkörpern 3. Die Schwimmkörper 3 sind hierbei unterhalb der Rahmenkonstruktion 2 angeordnet, d.h. die Rahmenkonstruktion befindet sich über der Wasseroberfläche eines die schwimmfähige Plattform 1 tragenden Binnengewässers.

Als Schwimmkörper 3 werden vorzugsweise Pontons aus wiederverwerteten Kunststoff eingesetzt. Die Rahmenkonstruktion 2 weist vorzugsweise die Form eines regelmäßigen Sechsecks auf und besitzt somit sechs Umfangsseiten mit gleicher Kantenlängen I, wobei jeweils zwei aneinander angrenzende Umfangsseiten der Rahmenkonstruktion 2 vorzugsweise einen Winkel von α = 120° einschließen.

Die Anordnung der Solarmodule 4 erfolgt auf der Rahmenkonstruktion 2 matrixartig, d.h. es werden mehrere Reihen von Solarmodule 4 gebildet, die jeweils parallel zueinander verlaufen und somit gleichzeitig auch Spalten von Solarmodulen 4 bilden. In einer bevorzugten Ausführungsform werden die Solarmodule 4 schräg auf der Rahmenkonstruktion 2 angeordnet, d.h. die Solarmodule 4 schließen mit der Rahmenkonstruktion 2 einen spitzen Winkel β ein. Weiterhin wird als bevorzugt angesehen, dass sämtliche Solarmodule 4 in dieselbe Raumrichtung ausgerichtet sind, so dass die von den Solarmodulen 4 aufgespannten Ebenen allesamt parallel zueinander verlaufen.

Alternativ können die Solarmodule 4 durch so genannte Röhrenkollektoren gebildet sein, welche auch parallel zur Rahmenkonstruktion 2 angeordnet sind. Derartige Röhrenkollektoren liegen somit flach auf der Rahmenkonstruktion 2 auf und können aufgrund der integrierten Strahlumlenkung in sehr geringen Abständen zueinander angeordnet werden.

Die Anordnung der Solarmodule 4 auf der Rahmenkonstruktion 2 kann hierbei starr, d.h. in festem Winkel β bezogen auf die Rahmenkonstruktion 2 oder mit variablen Winkel β erfolgen, so dass die Solarmodule 4 beispielsweise über eine Sonnenstandsnachführvorrichtung dem Sonnenstand in der Elevation, d.h. im Vertikalwinkel nachführbar sind. Zudem ist es möglich, die Plattform 1 selbst drehbar auf dem Binnengewässer 11 anzuordnen, um mittels dieser Drehung die Plattform 1 dem Sonnenstand im Azimut, d.h. im Horizontalwinkel, nachzuführen.

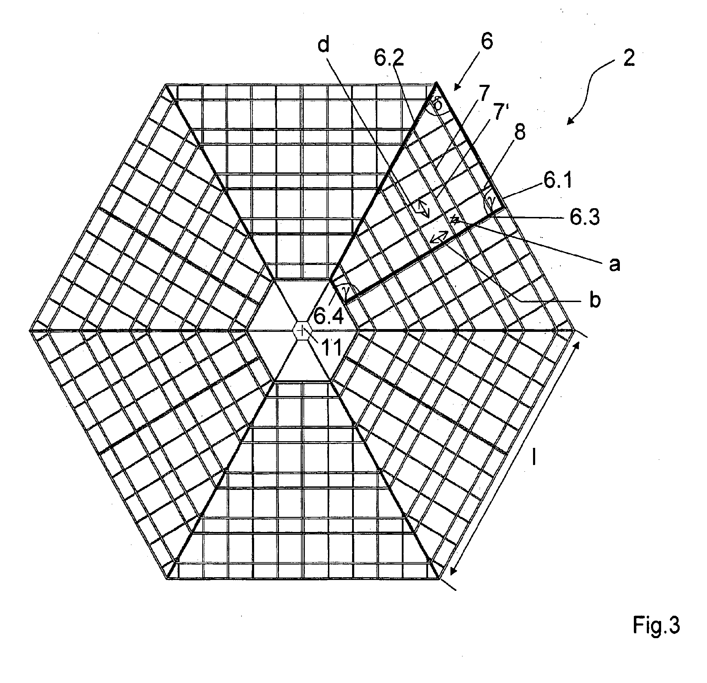

Fig. 3 zeigt die Rahmenkonstruktion 2 der Plattform 1 getrennt von den übrigen Komponenten der Plattform 1 in einer schematischen Draufsicht. Gemäß dem die Erfindung tragenden Gedanken besteht die Plattform 1 aus mehreren schwimmfähigen Plattformsegmenten 5, die jeweils dieselbe Querschnittsform aufweisen. Jedes Plattformsegment 5 weist hierbei einen Gitterrohrrahmen 6 auf, der insbesondere freitragend ausgebildet ist. Durch eine Verbindung mehrerer derartiger Gitterrohrrahmen 6 entsteht die Rahmenkonstruktion 2 der Plattform 1.

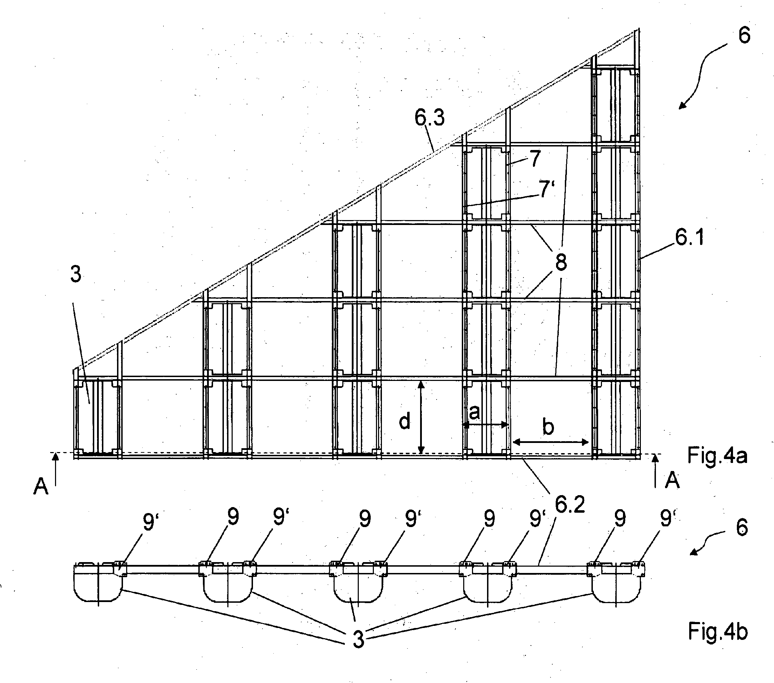

Die Gitterrohrrahmen 6 der Plattformsegmente 5 weisen hierbei dreieckige oder trapezförmige Querschnittsformen auf. Die Rahmenkonstruktion 2 besteht beispielsweise aus zwölf jeweils querschnittsgleichen Gitterrohrrahmen 6, die beispielsweise trapezförmig ausgebildet sind. Die einzelnen Gitterrohrrahmen 6 werden, wie in den Figuren 4a, 4b ersichtlich, durch einen äußeren Längsträger 6.1, einen Innenträger 6.4 sowie einen ersten und zweiten Seitenträger 6.2, 6.3 gebildet, die jeweils die freien Enden des äußeren Längsträgers 6.1 mit den freien Enden des Innenträgers 6.4 verbinden. Der äußere Längsträger 6.1 verläuft hierbei parallel zum Innenträger 6.4 und zu diesem beabstandet. Der den äußeren Längsträger 6.1 mit dem Innenträger 6.4 verbindende zweite Seitenträger 6.3 schließt sowohl mit dem äußeren Längsträger 6.1 als auch mit dem Innenträger 6.4 einen Winkel γ=90° ein. Der erste Seitenträger 6.2 schließt mit dem äußeren Längsträger 6.1 einen Winkel von δ=60° ein.

Zwischen dem äußeren Längsträger 6.1 und dem Innenträger 6.4 sind eine Vielzahl von weiteren Längsträgern 7, 7' angeordnet, die jeweils parallel und beabstandet zu dem äußeren Längsträger 6.1 sowie zum Innenträger 6.4 verlaufen. Vorzugsweise sind die weiteren Längsträger 7, 7' paarweise angeordnet, d.h. zwei Längsträger 7, 7' bilden ein Paar von Längsträgern 7, 7', wobei der Abstand a der beiden Längsträger 7, 7' eines Längsträgerpaares kleiner ist als der Abstand b zum nächstfolgenden Längsträgerpaar. Die Längsträger 7, 7' sind hierbei jeweils stirnseitig an dem ersten und zweiten Seitenträger 6.2, 6.3 befestigt. Diese Befestigung kann beispielsweise über eine Schweißverbindung, eine Schraubverbindung, eine Steckverbindung oder eine sonstige aus dem Stand der Technik bekannte Verbindungstechnik erfolgen. Die Gitterrohrrahmen 6 können hierbei aus korrosionsfestem oder verzinktem Stahl oder aus Aluminium gefertigt sein.

Ferner sind beim Gitterrohrrahmen 6 mehrere senkrecht zu den Längsträgern 7, 7' verlaufende Querträger 8 vorgesehen, die vorzugsweise parallel zum zweiten Seitenträger 6.3 verlaufen. Die Querträger 8 sind zueinander jeweils mit konstantem Abstand d angeordnet. Je nach Lage innerhalb des Gitterrohrrahmens 6 verlaufen die Querträger 8 entweder zwischen dem äußeren Längsträger 6.1 und dem Innenträger 6.4 oder zwischen dem äußeren Längsträger 6.1 und dem ersten Seitenträger 6.2. Aufgrund der Trapezform des Gitterrohrrahmens 6 weisen die Querträger 8 zumindest teilweise unterschiedliche Längen auf und überspannen somit eine unterschiedliche Anzahl von Längsträgerpaaren 7, 7'.

Zur Verbindung der einzelnen Gitterrohrrahmen 6 zur Rahmenkonstruktion 2 weisen der erste Seitenträger 6.2 und der zweite Seitenträger 6.3 mehrere Flansche 9, 9' auf, mittels derer die einzelnen Gitterrohrrahmen 6 der Plattformsegmente 5 beispielsweise über Schraubmittel miteinander verbindbar sind. Die Bildung der Rahmenkonstruktion 2 aus den Gitterrohrrahmen 6 erfolgt hierbei derart, dass jeweils zwei Gitterrohrrahmen 6 an ihren zweiten Seitenträgern 6.3 über die Flansche 9, 9' miteinander verbunden werden. Nach der Verbindung der beiden Gitterrohrrahmen 6 entsteht ein Gitterrohrrahmenpaar in der Form eines gleichschenkligen Trapezes mit einer Grundseite, deren Länge gleich der Kantenlänge I der Plattform 1 enstpricht. Die Verbindung von sechs derartigen Gitterrohrrahmenpaaren an ihren jeweiligen ersten Seitenträgern 6.2 über Flansche 9, 9' bildet die Rahmenkonstruktion 2 mit ihrer regelmäßigen Sechseckform aus.

Bei der Konstruktion und dem Aufbau der Rahmenkonstruktion 2 aus einzelnen Gitterrohrrahmen 6 ist hierbei wesentlich, dass die Rahmenkonstruktion 2, die im Wesentlichen eine Ebene aufspannt, eine hohe Verwindungssteifigkeit, aufweist. Dies ist insbesondere bei Wellengang auf einem Binnengewässer von Nöten, da die bei ruhigem Gewässer regelmäßig durch die Schwimmkörper 3 getragene Konstruktion bei Wellengang nur ungleichmäßig von den Schwimmkörpern getragen wird, bzw. von den Wellen punktuell angehoben wird. Eine mangelnde Verwindungssteifigkeit würde zu einem Verwinden der Rahmenkonstruktion 2 und damit zu einer Zerstörung der darauf angeordneten Solarmodule 4 führen.

Das in den Figuren 4a, 4b gezeigte Plattenformsegment 5 wird hierbei durch einen Gitterrohrrahmen 6 und eine Vielzahl von darunter angeordneten Schwimmkörpern 3 gebildet. Ein derartiges Plattformsegment 5 stellt hierbei eine vorgefertigte, transportable Teileinheit der Plattform 1 dar. Die Anordnung der einzelnen Schwimmkörper 3 am Gitterrohrrahmen 6 erfolgt derart, dass die Schwimmkörper 3 zumindest teilweise zwischen einem Längsträgerpaar 7, 7' aufgenommen sind und an diesen vorzugsweise durch Verschraubungen oder schraubenartige Befestigungsmittel befestigt sind. Zum Anordnen der Schwimmkörper 3 am jeweiligen Längsträgerpaar 7, 7' können beispielsweise Flansche vorgesehen sein, mit denen die Schwimmkörper 3 verschraubt werden. Der Abstand d des Abstandes zweier Querträger 8 zueinander ist vorzugsweise im Wesentlichen gleich der Längsausdehnung eines Schwimmkörpers 3, der Abstand a zweier Längsträger 7, 7' eines Längsträgerpaares entspricht vorzugsweise der Breite eines Schwimmkörpers 3. Somit werden die Schwimmkörper 3 in parallel zueinander verlaufenden und zueinander beabstandeten Reihen aufgenommen, wobei die Anzahl der in einer Reihe angeordneten Schwimmkörper von dem äußeren Längsträger 6.1 beginnend zum Innenträger 6.4 hin abnimmt.

Die zwischen den Schwimmkörperreihen verlaufenden, diese überspannenden Querträger 8 verbinden die einzelnen Schwimmkörperreihen miteinander und bilden zwischen diesen freitragende Strecken aus. Die Abmessungen der freitragenden Strecken sind vorzugsweise derart gewählt, dass eine optimale Hinterlüftung der Solarmodule 4 gewährleistet ist. Je nach konstruktiver Ausbildung der Rahmenkonstruktion 2 können die Schwimmkörperreihen jedoch auch nicht durchgehend Schwimmkörper 3 aufweisen, d.h. es können Lücken innerhalb der Schwimmkörperreihen durch fehlende Schwimmkörper 3 vorhanden sein, so dass dadurch eine höhere Durchlässigkeit zur Gewässeroberfläche und damit eine verbesserte Hinterlüftung erreicht wird.

Ein derartiger Aufbau eines Plattformsegments 5 bietet eine Reihe von grundlegenden Vorteilen. Zum einen ist es möglich, mittels der Plattformsegmente 5 eine relativ großflächige Plattform 1 aufzubauen, die in ihrer Gesamtheit vom Ort der Herstellung weder zum Binnengewässer 11 transportierbar wäre, noch am Binnengewässer 11 selbst von einem Transportfahrzeug oder einem Kran auf das Binnengewässer 11 zu heben wäre. Durch die Unterteilung der Plattform 1 in mehrere schwimmfähige Plattformsegmente 5 können diese getrennt voneinander transportiert und in das Binnengewässer 11 gehoben werden, wobei anschließend auf dem Binnengewässer 11 selbst die Plattformsegmente 5 zusammengefügt und zu einer gesamten Plattform 1 verbunden werden. Durch die Ausbildung des Gitterrohrrahmens 6 und damit der Rahmenkonstruktion 2 als freitragenden Rahmen mit einzelnen daran angeordneten Schwimmkörpern 3 wird eine hohe Offenheit der Plattform 1 in Richtung der Gewässeroberfläche erreicht. Dies bietet neben der Tatsache, dass eine verhältnismäßig geringe Gewässeroberfläche direkt von der Plattform 1 bedeckt und damit abgeschattet wird, weitere Vorteile hinsichtlich des Betriebs der Solarmodule 4 auf der Plattform 1. Zum einen werden die Solarmodule 4 durch auf dem Binnengewässer 11 vorherrschende Luftbewegungen, die durch die freitragende Ausbildung der Rahmenkonstruktion 2 auch an die Rückseiten der Solarmodule 4 herangeführt werden können, gut hinterlüftet, wodurch sich eine bessere Kühlung der Solarmodule 4 durch diese Luftströmungen ergibt. Zudem wird durch die offene Struktur der Plattform 1 erreicht, dass die durch die Verdunstung von Wassers des Binnengewässers 11 entstehende Verdunstungskälte auf die Solarmodule 4 einwirken kann und dadurch die Solarmodule 4 zusätzlich gekühlt werden. Mittels dieser offenen Anordnung kann der Wirkungsgrad der Solarmodule 4 um bis zu 10% gegenüber einer zur Wasseroberfläche hin geschlossenen Plattform erhöht werden.

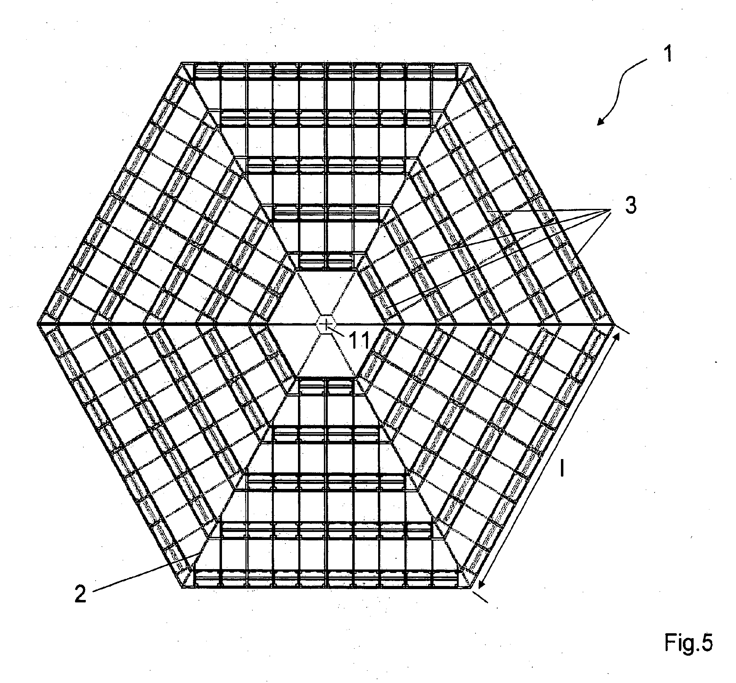

Nach dem Zusammenfügen der Plattformsegmente 5 zu einer Plattform 1 ergeben sich, wie in Fig. 5 ersichtlich, mehrere um das Zentrum 10 der Plattform 1 umlaufende Längsträgerpaare, die ihrerseits wiederum regelmäßige Sechsecke unterschiedlicher Größe aufspannen. Aufgrund der Tatsache, dass die Schwimmkörper 3 zumindest teilweise zwischen den Längsträgerpaaren aufgenommen sind, ergeben sich ebenfalls um das Zentrum 10 der Plattform 1 umlaufende Schwimmkörperreihen, die ebenfalls die Form regelmäßiger Sechsecke aufspannen. Die gesamte Plattform 1 ist somit von mehreren konzentrisch zum Zentrum 10 der Plattform 1 verlaufenden sechseckförmigen Reihen von Schwimmkörpern 3 getragen, wobei die Reihen zueinander jeweils gleich beabstandet sind, so dass der Umfang der Reihen von Schwimmkörpern 3 nach außen hin stets zunimmt. Vorzugsweise wird die Plattform 1 an ihren Außenseiten ebenfalls von einer umlaufenden Reihe von Schwimmkörpern 3 begrenzt. Somit ergeben sich mehrere konzentrisch zum Zentrum 10 der Plattform 1 verlaufende ringartige Schwimmkörperanordnungen.

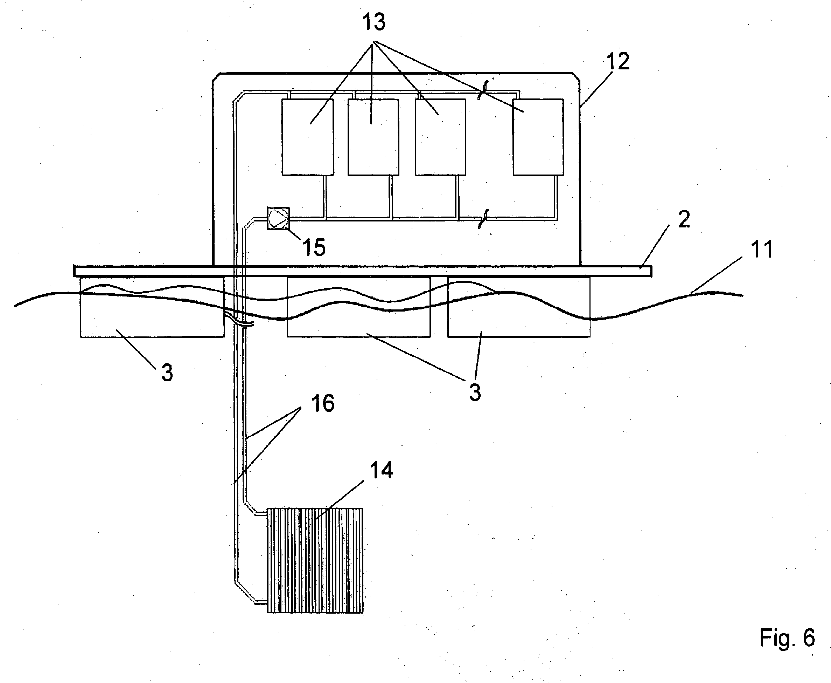

In einer bevorzugten Ausführungsform ist ein Wechselrichter 13 zur Erzeugung einer Wechselspannung aus der von den Solarmodulen 4 erzeugten Gleichspannung auf der Plattform 1 angeordnet, und zwar vorzugsweise im Zentrum 10 der Plattform 1. Der Wechselrichter 13 kann hierbei aus einer einzigen Wechselrichterkomponente jedoch auch, wie in Fig. 6 dargestellt, aus mehreren Wechselrichtereinzelkomponenten bestehen.

Der Wechselrichter 13 ist vorzugsweise in einem Gehäuse, und zwar einem Schaltschrank 12 aufgenommen, der vollständig geschlossen und wasserdicht ausgebildet ist, um das Eindringen von Spritzwasser oder Regenwasser zu verhindern. Die Installation des Wechselrichters 13 auf der Plattform 1 bietet den Vorteil, dass die von den Solarmodulen 4 erzeugte elektrische Energie, die in Form von Gleichstrom bzw. Gleichspannung vorliegt, in unmittelbarer Nähe des Entstehungsortes der Energie zu Wechselspannung gewandelt werden kann. Dadurch kann der Abstand zwischen den einzelnen Solarmodulen 4 und dem Wechselrichter 13 minimiert und damit die auf der Übertragungsstrecke der Gleichspannung bzw. Gleichstroms entstehenden Verluste verringert werden. Diese Tatsache wird zudem durch die zentrale Anordnung der Wechselrichter 13 in zumindest einem Schaltschrank 12 auf der Plattform 1 begünstigt.

Wie aus dem Stand der Technik hinlänglich bekannt, sinkt die Leistungsabgabe von Wechselrichtern 13 mit steigender Temperatur. Zudem verkürzen hohe Temperaturen die Lebensdauer der elektrischen Bauelemente des Wechselrichters 13. In geschlossenen Gebäuden ist daher die Kühlung der Wechselrichter 13 über eine ausreichende Belüftung des Aufstellortes erforderlich. Durch die wasserdichte Ausbildung des Schaltschranks 12 kann eine ausreichende Kühlung der Wechselrichter 13 durch eine Belüftung selbst nicht erfolgen. Daher sieht die Erfindung eine Kühlung des Wechselrichters 13 mittels einer Kühlflüssigkeit vor, die über eine Pumpe 15 in einem Rohrsystem aus Rohren 16 in Zirkulation gebracht werden kann. Die Rohre 16 sind an einen Wärmetauscher 14 angeschlossen, der zumindest teilweise in das Binnengewässer 11 getaucht ist. Dieser Wärmetauscher 14 kann beispielsweise aus einem Plattenwärmetauscher, aber auch durch ein mehrfach geschlungenes Rohr gebildet sein, das vorzugsweise durch eine Rippung eine vergrößerte Oberfläche aufweist. Die Rohre 16 sind zudem durch den Wechselrichter 13 oder mehrere Wechselrichterkomponenten geführt, wobei die Kühlflüssigkeit in thermischen Kontakt mit dem Ort der Wärmeentstehung gebracht wird. Somit ist aus den Rohren 16, der Pumpe 15 und dem Wärmetauscher 14 ein geschlossener Kühlkreislauf gebildet, wobei in diesem Kühlkreislauf durch die Pumpe 15 die Kühlflüssigkeit in Umlauf gebracht wird, die die in dem Wechselrichter 13 oder mehreren Wechselrichterkomponenten entstehende Wärme aufnimmt und über den Wärmetauscher 14 an das Binnengewässer 11 abgibt.

Abweichend hiervon können anstelle eines Kühlmittels ebenfalls direkt das im Binnengewässer 11 vorhandene Wasser zur Kühlung des Wechselrichters 13 oder mehrerer Wechselrichterkomponenten verwendet werden. Dadurch ist es möglich, ein Kühlsystem ohne den Wärmetauscher 14 aufzubauen, wobei eine Pumpe 15 das Wasser aus dem Gewässer 11 ansaugt, über die Wärmetauscher 13 führt und anschließend zurück in das Gewässer 11 abführt. Alternativ ist es auch möglich, nicht den Wechselrichter 13 selbst, sondern den gesamten Schaltschrank 12, d.h. die im Schaltschrank 12 befindliche Luft zu kühlen und damit indirekt eine Kühlung des Wechselrichters 13 zu erhalten.

Neben dem Wechselrichter 13 kann weitere, zum Betrieb der Solarmodule 4 notwendige Anschlusstechnik im Schaltschrank 12 angeordnet sein. Die Anschlusstechnik kann beispielsweise einen Lasttrennschalter zur elektrischen Trennung der Solarmodule 4 von dem Wechselrichter 13 im Fehlerfalle, eine Überspannungs- oder Blitzschutzeinrichtung, oder eine Überwachungs- und Monitoringeinrichtung zur Überwachung des Gesamtsystems umfassen. Zudem können Steuerungskomponenten zur Sonnenstandsnachführung der Solarmodule 4 oder der gesamten Plattform 1 im Schaltschrank 12 aufgenommen sein.

Zur weiteren Erhöhung der Effektivität der Energieerzeugung durch die Solarmodule 4 kann eine aktive Kühlung der Solarmodule 4 mittels des im Binnengewässer 11 vorhandenen Wassers erfolgen. Zudem ist es auch möglich, einen Kühlkreislauf vorzusehen, der mit einem speziellen Kühlmittel, das insbesondere frostbeständig ist, betrieben wird, das die in den Solarmodulen aufgrund der Sonneneinstrahlung entstehende Wärme über einen Wärmetauscher 14 in das Gewässer abführt. Selbstverständlich ist es möglich, dass die Solarmodule 4 zur Kühlung in den Kühlkreislauf des Wechselrichters 13 eingebunden sind. Eine weitere Erhöhung der Effektivität der Solarmodule 4 kann dadurch erreicht werden, dass eine Reinigungsvorrichtung zur Reinigung der Solarmodule 4 mittels des im Binnengewässer 11 vorhandenen Wassers erfolgt. Dies führt insbesondere in Binnengewässern 11, die einer erhöhten Staubbelastung unterliegen, beispielsweise Baggerseen, zu einer deutlichen Effektivitätssteigerung, da eine auf den Solarmodulen 4 anhaftende Staubschicht durch die Reinigungsvorrichtung abgelöst werden kann und damit eine erhöhte Einstrahlung auf die in den Solarmodulen vorgesehenen Photozellen erfolgen kann.

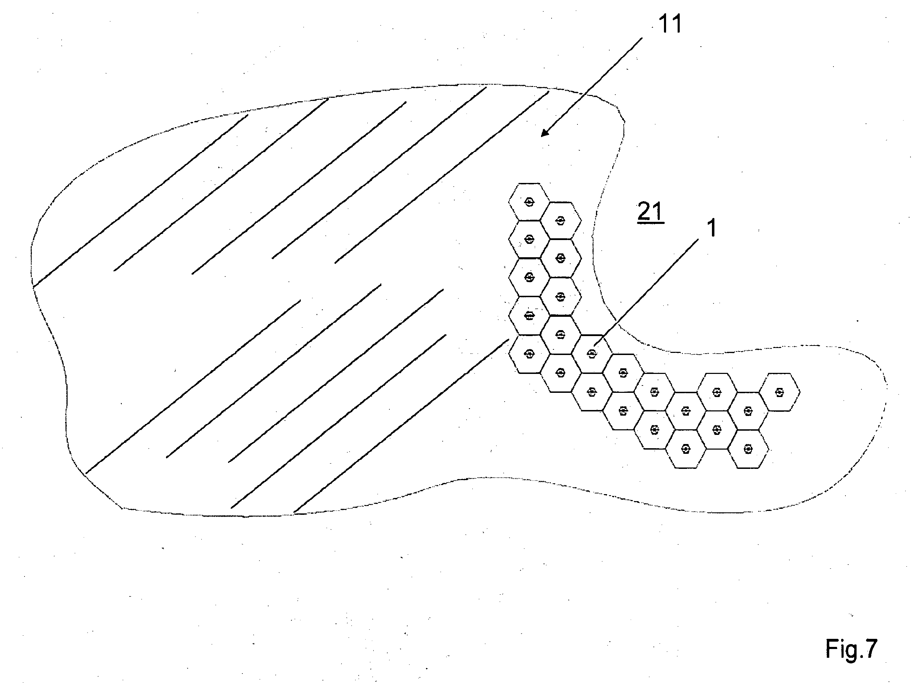

Zur Anordnung mehrerer Plattformen 1 aneinander und zur Verbindung der einzelnen Plattformen 1 untereinander weist die Rahmenkonstruktion 2 an ihren Außenseiten Flansche 17 auf, über die die Plattformen 1 miteinander beispielsweise über Schraubverbindungen verbindbar sind. Fig. 7 zeigt eine Anordnung einer Vielzahl von Plattformen 1 auf einem Binnengewässer 11, wobei die Plattformen 1, wie vorher beschrieben, beispielsweise die Form eines regelmäßigen Sechsecks aufweisen. Hierdurch ist es möglich, einen Plattformcluster bestehend aus einer Vielzahl von Plattformen 1 zu bilden, der einem nahezu beliebigen Uferverlauf dadurch folgen kann, dass an den Außenseiten einer Plattform 1 über die Flansche 17 weitere Plattformen 1 angeschlossen werden können. Hierdurch ergibt sich beispielsweise ein bienenwabenförmiger Plattformcluster. Es ist hierbei möglich, an eine Plattform 1 bis zu sechs weitere Plattformen 1 anzuordnen. Aufgrund der jeweils um 60° zueinander geneigten Außenseiten einer Plattform 1 kann ein Plattformcluster erzeugt werden, der sich an nahezu beliebige Uferverläufe eines Binnengewässers 11 anpassen lässt, wodurch beispielsweise ein vorgeschriebener Abstand zum Ufer 21 durch die Außenseiten des Plattformclusters eingehalten wird.

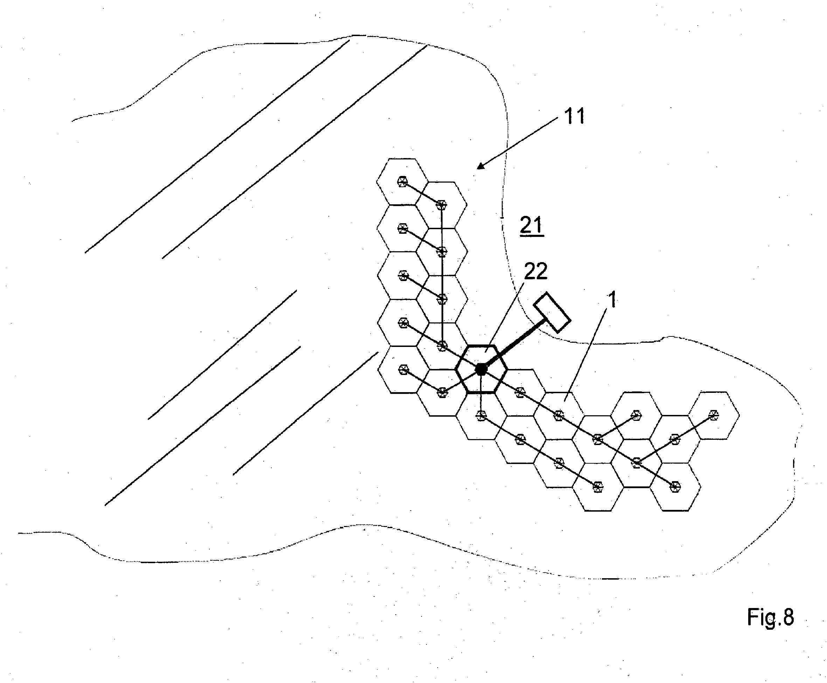

Innerhalb des Plattformclusters ist es möglich, dass einzelne Plattformen 1 definierte Aufgaben für einen Teil des Plattformclusters oder den gesamten Plattformcluster übernehmen. In Fig. 8 ist beispielsweise eine Ausführungsform gezeigt, in der eine Plattform 1 eine Ankoppelplattform 22 zur Übertragung der elektrischen Energie zum Ufer 21 bildet. Die elektrische Verbindung der Plattformen 1 untereinander erfolgt hierbei näherungsweise sternförmig zur Ankoppelplattform 22 hin, die ihrerseits die elektrischen Verbindungen zusammenführt und die elektrische Verbindung zum Uferbereich herstellt. Diese elektrische Verbindung zwischen dem Ufer 21 und der Ankoppelplattform 22 kann hierbei über Unterwasserkabel, teilweise abgetauchte Kabel, Schwimmkabel oder auf Schwimmkörpern aufliegenden Kabeln erfolgen.

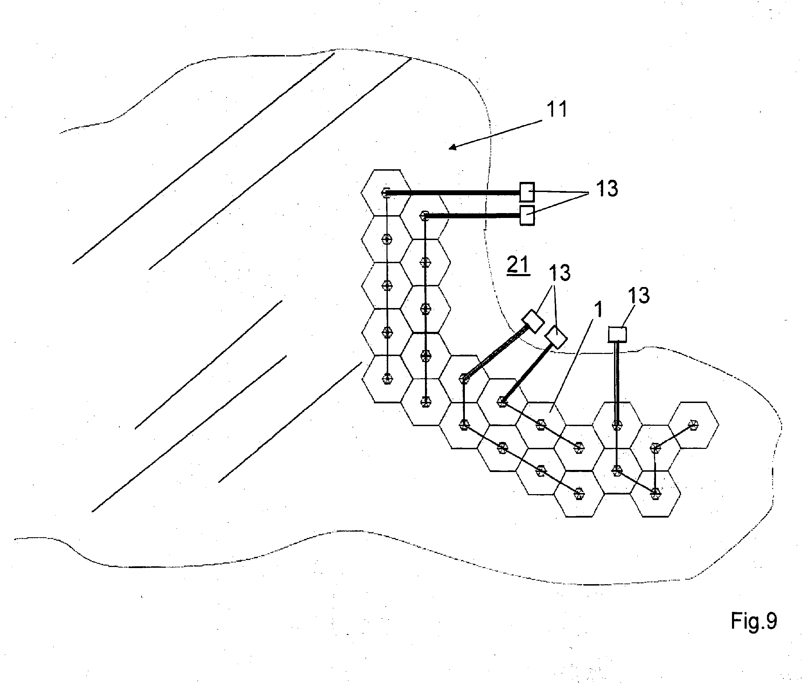

Weiterhin kann innerhalb der Plattformanordnung vorgesehen sein, dass lediglich auf einer oder auf einzelnen Plattformen 1 Wechselrichter 13 vorgesehen werden, so dass der auf einer Plattform 1 angeordnete Wechselrichter 13 die Wechselrichtung für mehrere Plattformen 1 übernimmt. Hierdurch ergibt sich insbesondere bei größeren Plattformanordnungen eine erhöhte Kostenersparnis aufgrund der Einsparung einer Vielzahl von Wechselrichtern 13 mit einer üblicherweise hinzunehmenden Verringerung des Wirkungsgrades der Gesamtanlage aufgrund der erhöhten Übertragungswege des Gleichstroms bzw. der Gleichspannung von den Solarmodulen 4 zu den Wechselrichtern 13. Zudem können die Wechselrichter 13, wie in Fig. 9 gezeigt, auch am Ufer 21 des Binnengewässers 11 installiert sein, so dass der durch die Solarmodule 4 erzeugte Gleichstrom bzw. die Gleichspannung mittels Unterwasserkabel, teilweise abgetauchter Kabel, Schwimmkabel oder auf Schwimmkörpern aufliegenden Kabeln an die Wechselrichter 13 übertragen wird. Eine Installation der Wechselrichter 13 auf der Plattform 1 bzw. auf der Plattformanordnung wird jedoch als bevorzugt angesehen.

Zudem können eine oder mehrere Plattformen 1 des Plattformclusters als Ankerplattform ausgebildet sein, die eine verstärkte Rahmenkonstruktion 2 aufweisen und durch an Land geführte oder am Grund des Binnengewässers 11 befestigte Mittel verankert sind. Diese Verankerung der Ankerplattform kann beispielsweise drehbar ausgebildet sein, so dass der Plattformcluster um diesen Ankerpunkt verdreht und damit im Azimut dem Sonnenstand nachgeführt werden kann.

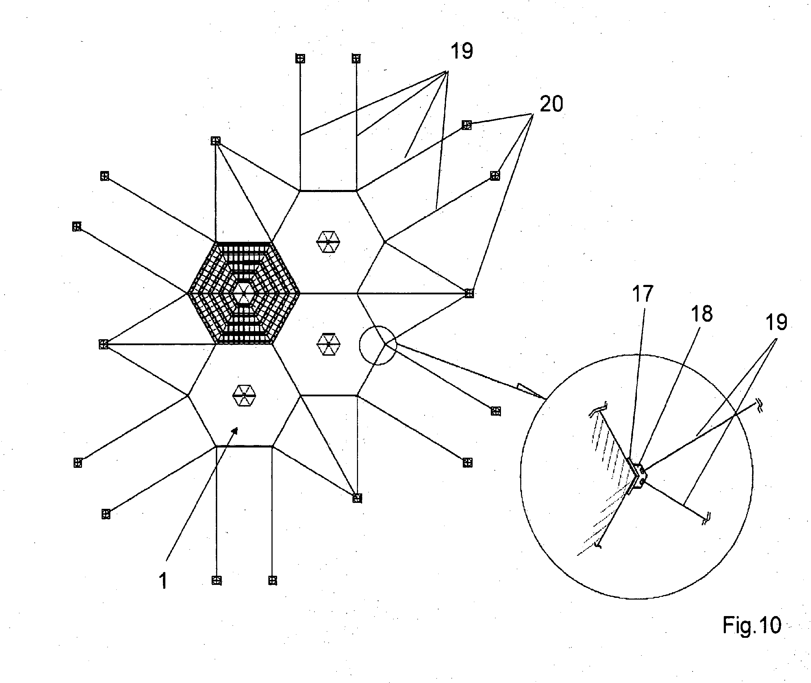

Abweichend hiervon ist es möglich, den gesamten Plattformcluster, wie in Fig. 10 gezeigt, mit am Ufer 21 und/oder am Grund des Binnengewässers 11 verankerten Mitteln gegen ein Abdriften, insbesondere bei Wind zu sichern. Hierzu werden vorzugsweise an den Außenkanten der außen liegenden Plattformen 1 eines Plattformclusters im Bereich der Kanten der sechseckigen Plattformen 1, an denen zwei äußere Längsträger 6.1 schräg aufeinander treffen, Ankerflansche 18 vorgesehen, an denen Ankertrosse 19 befestigbar sind, die in Richtung der Ankerpunkte 20 abgespannt sind. Dadurch wird der Plattformcluster vorzugsweise spinnennetzartig über die Ankertrosse 19 mit den Ankerpunkten 20 verbunden und somit gegen ein Abdriften, insbesondere bei Wind gesichert. Bei Verwendung einer einzelnen Plattform 1 auf einem Binnengewässer 11 ist ebenfalls eine zentrale Verankerung der Plattform 1 am Grund des Binnengewässers 11 sowie ein Abspannen der Plattform 1 zu mehreren Ankerpunkten 20 hin mittels Ankertrossen 19 möglich.

Zum Schutz einer einzelnen Plattform 1 bzw. des Plattformclusters ist vorgesehen, dass ein zentral zur Einzelplattform oder zur Plattformanordnung angeordneter Blitzableiter vorgesehen ist. Dieser ist vorzugsweise auf den Grund des Binnengewässers 11 hinabgeführt und elektrisch leitend mit ebendiesem verbunden. Für den Fall der Verwendung einer Ankerplattform kann der Blitzableiter vorzugsweise auf dieser installiert und mit der Grundverankerung zum Grund des Binnengewässers 11 hinabgeführt werden.

Die Erfindung wurde voranstehend an Ausführungsbeispielen beschrieben, es versteht sich, dass zahlreiche Variationen und Änderungen des Anmeldungsgegenstandes möglich sind, ohne hierdurch den Erfindungsgedanken zu verlassen.

### Bezugszeichenliste

- 1: Plattform
- 2: Rahmenkonstruktion
- 3: Schwimmkörper
- 4: Solarmodul
- 5: Plattformsegment
- 6: Gitterohrrahmen
- 6.1: äußerer Längsträger
- 6.2: erster Seitenträger
- 6.3: zweiter Seitenträger
- 6.4: Innenträger
- 7, 7': Längsträger bzw. Längsträgerpaar
- 8: Querträger
- 9, 9': Flansch
- 10: Zentrum
- 11: Binnengewässer
- 12: Schaltschrank
- 13: Wechselrichter
- 14: Wärmetauscher
- 15: Pumpe
- 16: Rohre
- 17: Flansch
- 18: Ankerflansch
- 19: Ankertross
- 20: Ankerpunkt
- 21: Ufer

- I: Kantenlänge
- α: Winkel
- β: Winkel
- y: Winkel
- δ: Winkel
- a: Abstand
- b: Abstand
- d: Abstand

## Patentansprüche

1. Schwimmfähige Plattform zur Anordnung von Solarmodulen (4) auf einem Binnengewässer (11) bestehend aus einer Rahmenkonstruktion (2), an deren Unterseite mehrere Schwimmkörper (3) angeordnet sind, bei der die Plattform (1) aus mehreren schwimmfähigen Plattformsegmenten (5) besteht, die jeweils dieselbe Querschnittsform aufweisen und jeweils ein schwimmfähiges Plattformsegment (5) einen freitragenden Gitterrohrrahmen (6) aufweist, der aus mehreren Längs- und Querträger (6.1, 6.4, 7, 7', 8) gebildet ist, wobei durch die Verbindung der Gitterrohrrahmen (6) der einzelnen Plattformsegmente (5) die Rahmenkonstruktion (2) der Plattform (1) gebildet ist, wobei der Gitterrohrrahmen (6) eines Plattformsegments (5) mehrere Paare von Längsträgern (6.1, 6.4, 7, 7') aufweist und zwischen einem Paar von Längsträgern (6.1, 6.4, 7, 7') jeweils zumindest eine Reihe von Schwimmkörpern (3) aufgenommen ist, **dadurch gekennzeichnet, dass** der Gitterrohrrahmen (6) eine dreieckige oder trapezförmige Querschnittsform aufweist.

2. Plattform nach Anspruch 1, **dadurch gekennzeichnet, dass** die Rahmenkonstruktion (2) die Form eines regelmäßigen Sechsecks aufweist, das aus zwölf dreieckigen oder trapezförmigen Gitterrohrrahmen (6) gebildet ist.

3. Plattform nach Anspruch 1 oder 2, **dadurch gekennzeichnet, dass** die Schwimmkörper (3) in gleich beabstandeten Reihen am Gitterrohrrahmen (6) angeordnet sind.

4. Plattform nach einem der Ansprüche 1 bis 3, **dadurch gekennzeichnet, dass** die Querträger (8) zumindest teilweise die aus Schwimmkörpern gebildeten Reihen überspannen.

5. Plattform nach einem der vorhergehenden Ansprüche, **dadurch gekennzeichnet, dass** an den Außenseiten der Gitterrohrrahmen (6) Flansche (9, 9') zum Verbinden der Gitterrohrrahmen (6) zur Rahmenkonstruktion (2) vorgesehen sind und/oder dass an den Umfangsseiten der Rahmenkonstruktion (2) Flansche (17) zum Verbinden der Plattformen untereinander und/oder zum Befestigen von Ankerflänschen vorgesehen sind.

6. Plattform nach einem der vorhergehenden Ansprüche, **dadurch gekennzeichnet, dass** die Solarmodule (4) auf der Rahmenkonstruktion (2) schräg, vorzugsweise mit verstellbaren Winkel (β) angeordnet sind und/oder dass die Solarmodule (4) zur Wasseroberfläche beabstandet angeordnet sind und/oder dass zumindest ein Wechselrichter (13) auf der Plattform (1) angeordnet ist.

7. Plattform nach Anspruch 6, **dadurch gekennzeichnet, dass** weitere Anschlusstechnik wie beispielsweise zumindest ein Lasttrennschalter, eine Überspannungs- und/oder Blitzschutzeinrichtung und/oder zumindest eine Überwachungs- und/oder Monitoringeinrichtung vorgesehen ist.

8. Plattform nach Anspruch 6 oder 7, **dadurch gekennzeichnet, dass** die Anschlusstechnik zentral auf der Plattform (1) und/oder in einem wasserdichten Bereich, vorzugsweise einem wasserdicht ausgebildeten Schaltschrank (12) angeordnet ist.

9. Plattform nach einem der Ansprüche 6 bis 8, **dadurch gekennzeichnet, dass** ein Kühlkreislauf zur Abführung der in der Anschlusstechnik, insbesondere im Wechselrichter (13) entstehenden Wärme in das Binnengewässer (11) vorgesehen ist und/oder dass ein Kühlkreislauf zur Kühlung des gesamten, die Anschlusstechnik aufnehmenden Bereichs vorgesehen ist.

10. Plattform nach einem der vorhergehenden Ansprüche, **dadurch gekennzeichnet, dass** eine Kühleinrichtung zur Kühlung der Solarmodule (4) selbst vorgesehen ist.

11. Plattform nach einem der vorhergehenden Ansprüche, **dadurch gekennzeichnet, dass** eine Reinigungsvorrichtung zur Reinigung der Solarmodule mittels des im Binnengewässer (11) vorhandenen Wassers vorgesehen ist und/oder dass Mittel zur sonnenstandsabhängigen Ausrichtung der Plattform (1) durch Drehung derselben auf dem Binnengewässer (11) vorgesehen sind.

12. Anordnung aus einem Binnengewässer und zumindest einer schwimmfähigen Plattform zur Aufnahme von Solarmodulen (4), **gekennzeichnet durch** zumindest eine Plattform (1) gemäß einem der vorhergehenden Ansprüche.

13. Anordnung nach Anspruch 12, **dadurch gekennzeichnet, dass** mehrere Plattformen (1) stirnseitig an den jeweiligen Rahmenkonstruktionen (2) mittels Flansche (1 7) miteinander verbunden sind und einen vorzugsweise bienenwabenförmigen Plattformcluster (1) bilden und/oder dass die Plattformen (1) derart angeordnet sind, dass sie dem Uferverlauf vorzugsweise im Wesentlichen mit konstantem Abstand folgen.

14. Anordnung nach Anspruch 13, **dadurch gekennzeichnet, dass** die einzelnen Plattformen (1) des Plattformclusters einen gemeinsamen, auf einer Plattform angeordneten Wechselrichter (13) aufweisen und/oder dass jeder einzelnen Plattform (1) oder einer Gruppe von Plattformen (1) des Plattformclusters ein Wechselrichter (13) zugeordnet ist.

15. Anordnung nach Anspruch 13 oder 14, **dadurch gekennzeichnet, dass** eine Plattform (1) des Plattformclusters als zentrale Ankerplattform verstärkt ausgebildet ist und durch am Ufer (21) und/oder am Grund des Binnengewässers (11) befestigte Mittel (19, 20) verankert ist und/oder dass die Übertragung der elektrischen Energie ans Ufer (21) über eine vorzugsweise zentral angeordnete Ankoppelplattform (22) erfolgt.

## Claims

1. A buoyant platform for arrangement of solar modules (4) on an inland water (11), consisting of a framework structure (2), on the underside of which a plurality of floating bodies (3) are arranged, wherein the platform (1) consists of a plurality of buoyant platform segments (5), which in each case have the same cross-sectional shape, and in each case a buoyant platform segment (5) has a self-supporting tubular lattice frame (6), formed by a plurality of longitudinal and transverse members (6.1, 6.4, 7, 7', 8), wherein the framework structure (2) of the platform (1) is formed by the connection of the tubular lattice frames (6) of the individual platform segments (5), wherein the tubular lattice frame (6) of a platform segment (5) has a plurality of pairs of longitudinal members (6.1, 6.4, 7, 7') and between one pair of longitudinal members (6.1, 6.4, 7, 7') in each case at least one row of floating bodies (3) is accommodated, **characterised in that** the tubular lattice frame (6) has a triangular or trapezoidal cross-sectional shape.

2. The platform according to claim 1, **characterised in that** the framework structure (2) has the shape of a regular hexagon, formed by twelve triangular or trapezoidal tubular lattice frames (6).

3. The platform according to claim 1 or 2, **characterised in that** the floating bodies (3) are arranged on the tubular lattice frame (6) in rows that are equally spaced apart.

4. The platform according to one of the claims 1 to 3, **characterised in that** the transverse members (8) at least partially span the rows formed by the floating bodies.

5. The platform according to one of the preceding claims, **characterised in that** flanges (9, 9') are provided on the outer sides of the tubular lattice frames (6) for connecting the tubular lattice frames (6) so as to form the framework structure (2), and/or **in that** flanges (17) are provided on the peripheral sides of the framework structure (2) for connecting the platforms with one another, and/or for attaching anchor flanges.

6. The platform according to one of the preceding claims, **characterised in that** the solar modules (4) are arranged in an inclined manner on the framework structure (2), preferably at an adjustable angle (β), and/or **in that** the solar modules (4) are arranged at a separation distance from the water surface, and/or **in that** at least one power inverter (13) is arranged on the platform (1).

7. The platform according to claim 6, **characterised in that** further connecting systems technology is provided, such as, for example, at least one load circuit breaker, a surge and/or lightning protector, and/or at least one surveillance and/or monitoring unit.

8. The platform according to claim 6 or 7, **characterised in that** the connecting systems technology is arranged centrally on the platform (1), and/or in a watertight region, preferably in a control cabinet (12) of watertight design.

9. The platform according to one of the claims 6 to 8, **characterised in that** a cooling circuit is provided for discharging the heat generated in the connecting systems technology, in particular in the power inverter (13), into the inland water (11), and/or **in that** a cooling circuit is provided for cooling the whole of the region accommodating the connecting systems technology.

10. The platform according to one of the preceding claims, **characterised in that** a cooling device is provided for cooling the solar modules (4) in particular.

11. The platform according to one of the preceding claims, **characterised in that** a cleaning device is provided for cleaning the solar modules by means of the water present in the inland water (11), and/or **in that** means are provided for purposes of solar attitude-dependent alignment of the platform (1) by means of rotation of the same on the inland water (11).

12. An arrangement of an inland water, and at least one buoyant platform for accommodating solar modules (4), **characterised by** at least one platform (1) in accordance with one of the preceding claims.

13. The arrangement according to claim 12, **characterised in that** a plurality of platforms (1) are connected with one another on their faces on the respective framework structures (2) by means of flanges (17), and form a preferably honeycomb-shaped platform cluster (1), and/or **in that** the platforms (1) are arranged such that they follow the course of the shoreline, preferably at an essentially constant separation distance.

14. The arrangement according to claim 13, **characterised in that** the individual platforms (1) of the platform cluster have a common power inverter (13) arranged on one platform, and/or **in that** a power inverter (13) is assigned to each individual platform (1), or to a group of platforms (1) of the platform cluster.

15. The arrangement according to claim 13 or 14, **characterised in that** one platform (1) of the platform cluster is designed in a reinforced manner as a central anchor platform, and is anchored by means of an agent (19, 20) attached to the shoreline (21) and/or to the bottom of the inland water (11), and/or **in that** the transfer of the electrical energy to the shoreline (21) takes place via a preferably centrally arranged coupling platform (22).

## Revendications

1. Plateforme apte à flotter pour l'agencement de modules solaires (4) sur des eaux intérieures (11) se composant d'une construction de cadre (2) sur le dessous de laquelle plusieurs corps flottants (3) sont disposés, la plateforme (1) se composant de plusieurs segments de plateforme (5) aptes à flotter, lesquels présentent respectivement la même forme en section transversale, et respectivement un segment de plateforme (5) apte à flotter présentant un cadre tubulaire à grille (6) en porte-à-faux qui est formé par plusieurs supports longitudinaux et transversaux (6.1, 6.4, 7, 7', 8), dans laquelle, grâce à la liaison des cadres tubulaires à grille (6) des segments de plateforme (5) individuels, la construction de cadre (2) de la plateforme (1) est réalisée, le cadre tubulaire à grille (6) d'un segment de plateforme (5) présentant plusieurs paires de supports longitudinaux (6.1, 6.4, 7, 7'), et respectivement au moins une rangée de corps flottants (3) étant réceptionnée entre une paire de supports longitudinaux (6.1, 6.4, 7, 7'), **caractérisée en ce que** le cadre tubulaire à grille (6) présente une forme triangulaire ou trapézoïdale en section transversale.

2. Plateforme selon la revendication 1, **caractérisée en ce que** la construction de cadre (2) présente la forme d'un hexagone régulier, lequel est formé par douze cadres tubulaires à grille (6) triangulaires ou trapézoïdaux.

3. Plateforme selon la revendication 1 ou 2, **caractérisée en ce que** les corps flottants (3) sont disposés en rangées espacées de manière égale sur le cadre tubulaire à grille (6).

4. Plateforme selon l'une des revendications 1 à 3, **caractérisée en ce que** les supports transversaux (8) enjambent au moins partiellement les rangées formées par des corps flottants.

5. Plateforme selon l'une des revendications précédentes, **caractérisée en ce que** des brides (9, 9') sont prévues sur les côtés extérieurs des cadres tubulaires à grille (6) pour relier les cadres tubulaires à grille (6) à la construction de cadre (2) et/ou **en ce que** des brides (17) sont prévues sur les côtés périphériques de la construction de cadre (2) pour relier les plateformes entre elles et/ou pour fixer des brides d'ancrage.

6. Plateforme selon l'une des revendications précédentes, **caractérisée en ce que** les modules solaires (4) sont disposés en biais, de préférence avec un angle (β) réglable, sur la construction de cadre (2) et/ou **en ce que** les modules solaires (4) sont disposés de manière espacée par rapport à la surface de l'eau et/ou **en ce qu'**au moins un onduleur (13) est disposé sur la plateforme (1).

7. Plateforme selon la revendication 6, **caractérisée en ce que** l'on prévoit une autre connectique telle par exemple au moins un interrupteur-sectionneur, un dispositif de protection contre les surtensions et/ou la foudre et/ou au moins un dispositif de surveillance et ou de monitoring.

8. Plateforme selon la revendication 6 ou 7, **caractérisée en ce que** la connectique est disposée de manière centrale sur la plateforme (1) et/ou dans une zone étanche à l'eau, de préférence dans une armoire de distribution (12) réalisée de manière étanche à l'eau.

9. Plateforme selon l'une des revendications 6 à 8, **caractérisée en ce que** l'on prévoit un circuit de refroidissement pour évacuer la chaleur, produite dans la connectique, en particulier dans l'onduleur (13), dans les eaux intérieures (11) et/ou **en ce que** l'on prévoit un circuit de refroidissement pour refroidir l'ensemble de la zone réceptionnant la connectique.

10. Plateforme selon l'une des revendications précédentes, **caractérisée en ce que** l'on prévoit un dispositif de refroidissement pour le refroidissement des modules solaires (4).

11. Plateforme selon l'une des revendications précédentes, **caractérisée en ce que** l'on prévoit un dispositif de nettoyage pour le nettoyage des modules solaires au moyen de l'eau présente dans les eaux intérieures (11) et/ou **en ce que** l'on prévoit des moyens pour l'orientation de la plateforme (1) en fonction de la position du soleil par rotation de celle-ci sur les eaux intérieures (11).

12. Agencement formé par des eaux intérieures et au moins une plateforme apte à flotter pour la réception de modules solaires (4), **caractérisé par** au moins une plateforme (1) selon l'une des revendications précédentes.

13. Agencement selon la revendication 12, **caractérisé en ce que** plusieurs plateformes (1) sont reliées entre elles, du côté frontal, aux constructions de cadre (2) respectives au moyen de brides (17) et forment de préférence un regroupement de plateformes (1) en forme de nid d'abeilles et/ou **en ce que** les plateformes (1) sont disposées de manière à ce qu'elles suivent le tracé de la berge de préférence sensiblement à une distance constante.

14. Agencement selon la revendication 13, **caractérisé en ce que** les plateformes (1) individuelles du regroupement de plateformes présentent un onduleur (13) commun disposé sur une plateforme et/ou **en ce qu'**un onduleur (13) est associé à chaque plateforme (1) individuelle ou à un groupe de plateformes (1) du regroupement de plateformes.

15. Agencement selon la revendication 13 ou 14, **caractérisé en ce qu'**une plateforme (1) du regroupement de plateformes est réalisée de manière renforcée en tant que plateforme d'ancrage centrale et est ancrée par des moyens (19, 20) fixés sur la berge (21) et/ou au fond des eaux intérieures (11) et/ou **en ce que** la transmission de l'énergie électrique vers la berge (21) s'effectue par l'intermédiaire d'une plateforme de couplage (22) de préférence disposée de manière centrale.
